**Europäisches Patentamt**

(19) **European Patent Office**

**Office européen des brevets**

(11) Veröffentlichungsnummer: **0 016 324**
**B1**

## (12) EUROPÄISCHE PATENTSCHRIFT

(45) Veröffentlichungstag der Patentschrift:
27.04.83

(51) Int. Cl.³: **C 08 K 5/06,** C 08 K 5/17,
C 08 K 3/28, C 08 J 3/16,
C 08 C 1/15

(21) Anmeldenummer: **80100542.2**

(22) Anmeldetag: **04.02.80**

(54) **Verwendung einer Mischung aus Ammoniak und/oder Aminen und Polyätherverbindungen als Wärmesensibilisierungsmittel.**

(30) Priorität: **14.02.79 DE 2905651**

(43) Veröffentlichungstag der Anmeldung:
**01.10.80 Patentblatt 80/20**

(45) Bekanntmachung des Hinweises auf die Patenterteilung:
**27.04.83 Patentblatt 83/17**

(84) Benannte Vertragsstaaten:
**AT BE CH DE FR GB IT NL**

(56) Entgegenhaltungen:
**DE-A-2 617 589**
**DE-A-2 653 685**
**DE-B-2 226 269**
**US-A-3 878 152**
**US-A-3 969 289**

(73) Patentinhaber: **BAYER AG, Zentralbereich Patente, Marken und Lizenzen, D-5090 Leverkusen 1, Bayerwerk (DE)**

(72) Erfinder: **Perrey, Hermann, Dr., Auf der Rheinaue 8, D-4150 Krefeld 11 (DE)**
Erfinder: **Matner, Martin, Dr., Dorfstrasse 14, D-5068 Odenthal (DE)**

ACTORUM AG

Verwendung einer Mischung aus Ammoniak und/oder Aminen und Polyätherverbindungen
als Wärmesensibilisierungsmittel

Die Erfindung betrifft die Verwendung einer Mischung aus Ammoniak und/oder Mono- und/oder Polyaminen und Polyätherverbindungen als Wärmesensibilisierungsmittel bei der Herstellung von wärmesensiblen natürlichen und/oder synthetischen Latizes.

In der DE-AS Nr. 2226269 sind eine Reihe von Wärmesensibilisierungsmitteln, wie z.B. Polyvinylalkyläther, wasserlösliche Polyacetale, oxalkylierte Polysiloxane und kationenaktive Stoffe, und ihre Nachteile beschrieben. In dieser Auslegeschrift sowie auch in der DE-AS Nr. 2263921 wird ein Verfahren zum Wärmesensibilisieren von Polymerdispersionen vorgestellt, bei dem alkoxylierte Amine mit inverser Löslichkeit in Wasser den Polymerdispersionen zugesetzt werden und hierauf der pH-Wert des Gemisches unter 6 gestellt wird.

Doch auch dieses Verfahren vermag nicht zu befriedigen, insbesondere weil die benötigten Einsatzmengen an oxalkylierten Aminen inverser Löslichkeit bezogen auf die Polymerisatmenge sehr hoch liegen. Alkoxylierte Alkylamine mit 10 bis 24 C-Atomen im Alkylrest sind als Wärmesensibilisierungsmittel in der Schweizer Patentanmeldung Nr. 4600/73 beschrieben. Jedoch auch hier sind grosse Einsatzmengen zur Wärmesensibilisierung erforderlich.

Aufgabe der Erfindung ist es, ein Wärmesensibilisierungsmittel bereitzustellen, welches die geschilderten Nachteile nicht aufweist.

Gegenstand der Erfindung ist somit die Verwendung von 0,01-4 Gew.%, bezogen auf den Polymergehalt, Ammoniak und/oder Mono- und/oder Polyamin in Kombination mit 0,5-10 Gew.%, bezogen auf den Polymergehalt, eines Aminopolyäthers und/oder nichtionischen Tensides auf Polyätherbasis zur Wärmesensibilisierung von natürlichen und/oder synthetischen Latizes, bei denen das Latexgemisch auf einen pH-Wert von kleiner als 7 eingestellt wird.

Die einsetzbaren Aminopolyäther erhält man durch Polyalkoxylierung von aliphatischen oder aromatischen Mono- oder Polyaminen.

Als aliphatische oder aromatische Mono- oder Polyamine können Verbindungen zur Alkoxylierung eingesetzt werden, wie z.B. Methyl-, Äthyl-, Propyl-, Butyl-, Hexyl-, Octyl-, Dodecyl-, Hexadecyl-, Octadecyl-, Allyl-, Oleyl-, Hydroxyäthyl-, Hydroxypropyl-, Cyclohexyl-, Dimethyl-, Diäthyl-, Dipropyl-, Dibutyl-, Benzyl-, Phenyl-, Äthylendi-, Diäthylentri-, Triäthylentetra-, Tetraäthylenpenta-, Pentaäthylenhexa-, Propylendi-, Butylendi-, Hexamethyldi- oder Isophorondiamin.

Zur Herstellung der Aminopolyäther werden die Amine nach üblichen Verfahren alkoxyliert. Hierbei kommen als Alkylenoxide vorzugsweise Äthylen- und Propylenoxid zum Zuge. Es ist möglich, reine Aminopolyäthylenoxide wie -polypropylenoxide herzustellen. Aber auch Produkte, die Äthylen- und Propylenoxid misch- oder blockcopolymerisiert enthalten, können verwendet werden. Die Aminopolyäther enthalten bevorzugt 3-50 Äthylenoxid und/oder 3-40 Propylenoxideinheiten.

Vorteilhaft werden solche Aminopolyäther eingesetzt, die wasserlöslich oder wasseremulgierbar sind. Bei den wasserlöslichen kann es sich auch um Produkte mit inverser Löslichkeit handeln.

Aber auch an sich unlösliche Aminopolyäther, wie z.B. solche mit höheren Propylenoxidanteilen, lassen sich in emulgierter Form einsetzen. Zur Emulgierung werden den üblichen Polyätheraminen Emulgatoren, wie z.B. Alkylsulfonate, Alkylarylsulfonate, Fettalkoholsulfate oder Fettsäuresalz beispielsweise in Mengen von 0,5-10 Gew.%, bezogen auf die Gewichtsmenge der unlöslichen Polyätheramine zugesetzt. Werden die unlöslichen Polyätheramine in Kombination mit den nichtionischen Tensiden zur Wärmesensibilisierung angewandt, so kann in der Regel auf den Zusatz weiterer Emulgatoren verzichtet werden.

Als Beispiele für die erfindungsgemässen Aminopolyäther seien aufgeführt:

Äthoxylate von Äthanolamin, Benzylamin, Cyclohexylamin, Dodecylamin, Oleylamin, Äthylendiamin und Hexamethylendiamin mit 4-40 mol Äthylenoxid, Propoxylate von Methylamin, Isopropanolamin, Äthylendiamin und Hexamethylendiamin mit 4-40 mol Propylenoxid, Alkoxylate von Methylamin, Cyclohexylamin, Isopropanolamin, Äthanolamin, Äthylendiamin, Hexamethylendiamin, Dodecylamin und Oleylamin mit je 4-30 mol Äthylen und Propylenoxid.

Als verwendbare nichtionische Tenside auf Polyätherbasis können alle oberflächenaktiven Polyalkoxylate von Alkoholen, aliphatischen Carbonsäuren, aliphatischen Carbonsäureamiden und Alkylsulfonsäureamiden mit vorzugsweise 10 bis 20 C-Atomen und von alkylierten Phenolen, Naphtholen und Hydroxydiphenylen mit vorzugsweise 6 bis 16 C-Atomen im Alkylrest eingesetzt werden, wobei sich die Polyalkoxylreste von Alkylenoxiden, vorzugsweise von Äthylen- und/oder Propylenoxid ableiten. Vorzugsweise sind 3-50 Äthylenoxid und/oder 3-30 Propylenoxideinheiten vorhanden.

Die Verbindungen dieser Art, ihre Herstellung und ihre physikalischen Eigenschaften sind in vielen Veröffentlichungen ausführlich beschrieben, so z.B. in K. Lindner, „Tenside-Textilhilfsmittel-Waschrohstoffe", Wiss.-Verlags-GmbH, Stuttgart 1964, auf S. 864 ff. Vorzugsweise werden solche Produkte eingesetzt, die wasserlöslich bzw. wasseremulgierbar sind.

Beispielhaft seien aufgeführt:

Fettalkohol, Fettsäure- und Fettsäureamidäthoxylate mit vorzugsweise 7-50 Äthylenoxideinheiten, Octyl- und Nonylphenoläthoxylate mit vorzugsweise 7-50 Äthylenoxideinheiten, Benzylhydroxydiphenyläthoxylate mit vorzugsweise 7-30 Äthylenoxideinheiten.

Als verwendbare nichtionische Tenside auf Polyätherbasis können ferner Alkylenoxid/Blockpolymerisate, die unter der Bezeichnung Pluronics bekannt sind, eingesetzt werden. Herstellung, Aufbau und Eigenschaften dieser Produkte, die durch Einwirkung von Äthylenoxid auf unlösliche Polyalkylenoxide, vorzugsweise Polypropylenoxide, entstehen, sind z.B. von K. Lindner auf S. 1052 ff. beschrieben.

Bevorzugt werden nur Aminopolyäther als Mischkomponente eingesetzt.

Ammoniak, Mono- oder Polyamine wirken in dem Verfahren im sauren pH-Bereich als Koagulierreagentien. Als Mono- oder Polyamine werden vorzugsweise wasserlösliche Amine, wie z.B. Methylamin, Dimethylamin, Trimethylamin, Äthylamin, Diäthylamin, Propylamin, Isopropylamin, Butylamin, Isobutylamin, Cyclohexylamin, Äthylendiamin, Diäthylentriamin, Triäthylentetramin, Tetraäthylenpentamin, Pentaäthylenhexamin, Propylendiamin, Butylendiamin, Hexamethylendiamin verwendet.

Hinsichtlich der Wirksamkeit der Amine kann festgestellt werden, dass Polyamine in der Regel wirksamer sind als Ammoniak und die Monoamine, d.h. dass von ihnen geringere Einsatzmengen erforderlich sind.

Zur Herstellung der wärmesensibilisierbaren synthetischen Polymerlatizes können übliche olefinisch ungesättigte Monomere in wässeriger Emulsion polymerisiert werden. Beispiele für die Herstellung derartiger Latizes finden sich in der deutschen Patentschrift Nr. 1243394 und in den deutschen Offenlegungsschriften Nrn. 2232526 und 2005974. Als Monomere kommen alle radikalisch polymerisierbaren olefinisch ungesättigten Verbindungen in Frage, z.B. Äthylen, Butadien, Isopren, Acrylnitril, Styrol, Divinylbenzol, $\alpha$-Methylstyrol, Methacrylnitril, Acrylsäure, Methacrylsäure, 2-Chlorbutadien-1,3, Ester der Acrylsäure und Methacrylsäure mit $C_1$ bis $C_8$-Alkoholen oder Polyolen, Acrylamid, Methacrylamid, N-Methylol(meth)acrylamid, (Meth)acrylamido-N-methylolmethyläther, Itakonsäure, Maleinsäure, Fumarsäure, Diester und Halbester ungesättigter Dicarbonsäuren, Vinylchlorid, Vinylacetat, Vinylidenchlorid, die allein oder in Kombination miteinander eingesetzt werden können.

Die Polymerisation wird in Gegenwart von Emulgatoren durchgeführt, wobei die üblichen nichtionischen oder anionischen Emulgiermittel allein oder in Kombination miteinander verwendet werden können. Die Gesamtmenge an Emulgator kann ca. 0,1-10 Gew.%, bezogen auf die Monomeren, betragen.

Die Emulsionspolymerisation kann mit Radikalbildnern, vorzugsweise mit organischen Peroxidverbindungen ausgelöst werden, die bevorzugt in Mengen von 0,01 bis 2 Gew.%, bezogen auf Monomere, eingesetzt werden. Je nach Monomerkombination können zur Erniedrigung des Molekulargewichtes des Polymerisates geringe Mengen an Reglern mitverwendet werden, z.B. Mercaptane, Halogenkohlenwasserstoffe. Die Emulsionspolymerisation ist auf zwei Wegen möglich:

Man kann die Gesamtmenge der Monomeren und den grössten Teil der die Emulgatoren enthaltenden wässerigen Phase vorlegen, die Polymerisation durch Zugabe des Initiators starten und im Verlauf der Polymerisation den Rest der wässerigen Phase kontinuierlich oder absatzweise zugeben. Man kann auch die Technik des Monomerenzulaufs benutzen; dabei wird nur ein Teil der Monomeren und der das Emulgiermittel enthaltenden wässerigen Phase vorgelegt und nach Starten der Polymerisation der Rest der Monomeren und der wässerigen Phase gleichmässig oder absatzweise nach Massgabe des Umsatzes zugefügt. Der zudosierte Monomerenanteil kann in der wässerigen Phase voremulgiert sein. Beide Verfahren sind bekannt.

Als Beispiel für natürlich Polymerlatizes sei Naturkautschuk/Latex erwähnt.

Die wärmesensibel einstellbaren Latizes können vor oder bei der Verarbeitung mit Zusatzstoffen versetzt werden. Zusätze sind z.B. Farbstoffe, Pigmente, Füllstoffe, Verdicker, Alterungsschutzmittel, wasserlösliche Harze oder Vulkanisationschemikalien.

Das Ansäuern der Latexmischungen auf pH-Werte kleiner als 7 geschieht mit organischen Carbonsäuren, wie z.B. Ameisensäure, Essigsäure, Bernsteinsäure oder Maleinsäure, vorzugsweise in wässeriger Lösung, oder mit verdünnten Mineralsäuren.

Die Zugabe der Koagulierreagentien, Ammoniak und/oder Mono- und/oder Polyamine und der Polyätherverbindungen zu den Polymerlatizes, die einen Polymergehalt von 5-55 Gew.%, vorzugsweise 5-45 Gew.%, aufweisen, erfolgt in beliebiger Reihenfolge. Die Mischung aus Koagulierreagentien und Polyätherverbindungen kann auch getrennt hergestellt und anschliessend zugegeben werden. Bezogen auf den Polymergehalt kommen die Koagulierreagentien in 0,01-4 Gew.%, bevorzugt in 0,05-2,5 Gew.%, zur Anwendung, während die Polyätherverbindungen in Mengen von 0,5-10 Gew.%, bevorzugt von 1-5 Gew.%, zugegeben werden. Hierbei besteht eine Abhängigkeit zwischen den Einsatzmengen an Koagulierreagenz und Polyätherverbindungen. Je mehr Koagulierreagenz verwendet wird, desto niedriger stellt sich bei konstanter Polyäthermenge nach Wärmesensibilisierung durch Ansäuern der Koagulationspunkt ein, bzw. je mehr Polyätherverbindung verwendet wird, desto höher stellt sich bei konstanter Koagulierreagenz der Koagulationspunkt ein.

Die Mischung aus Polymerlatex, Koagulierreagenz und Polyätherstabilisatoren ist praktisch unbegrenzt lagerfähig und kann somit auch nach längerer Lagerung durch Ansäuern wärmesensibilisiert werden.

Beim Ansäuern werden vorzugsweise pH-Werte zwischen 6 und 2, und besonders bevorzugt zwischen 5 und 3 eingestellt. Ein besonderer Vorteil des Systems liegt darin, dass der Koagulationspunkt im Bereich zwischen pH 6 und 3 nahezu unabhängig vom pH-Wert liegt. Erst bei niedrigerem Wert sinkt der Koagulationspunkt einer Mischung, während das System bei pH-Werten oberhalb von 7 im allgemeinen nicht wärmesensibilisierbar ist.

In manchen Fällen kann die mechanische Stabilität der Mischungen durch Zugabe von 0,5- 3 Gew.%, bezogen auf das Polymerisat, anionaktiver Emulgatoren, wie vorzugsweise Alkylsulfonate oder Alkylarylsulfonate noch gesteigert werden.

Mischungen aus Latizes und Koagulierreagentien sind ohne Polyätherverbindungen nicht wärmesensibilisierbar. Hier kommt es beim Ansäuern entweder sofort oder beim Stehenlassen zu Stippenbildung oder vollständiger Koagulation der Mischung bereits bei Zimmertemperaturen. Die als Polyätherverbindungen verwendbaren nichtionischen Tenside und Aminopolyäther können entweder allein oder in Kombination miteinander eingesetzt werden.

Ein Teil der Polyätheramine ist in den deutschen Auslegeschriften Nrn. 2226269, 2263921 und in der Schweizer Patentanmeldung Nr. 4600/73 als Wärmesensibilisierungsmittel beschrieben. Diese invers löslichen Aminopolyäther sind bei dem erfindungsgemässen Verfahren bereits bei derart geringen Einsatzmengen als Stabilisatoren wirksam, bei denen ohne Ammoniak- oder Aminzugabe als Koagulierreagenz nach Ansäuern keine Wärmesensibilisierung der Mischung erfolgt.

*Beispiel 1*

Zu 300 g eines 43,5%igen Latex eines Copolymerisates von 46 Gew.% Styrol, 50 Gew.% Butadien, 2 Gew.% Acrylsäure und 2 Gew.% N-Methylolacrylamid gibt man eine Lösung von 2 g Äthylendiamin und 8 g eines äthoxylierten Nonylphenols (10 mol Äthylenoxid/mol) in 190 g Wasser. Man erhält eine lagerstabile Mischung.

Hierauf wird mit 10 gew.%iger wässeriger Maleinsäure auf pH 3 gestellt und der Koagulationspunkt nach folgender Methode bestimmt:

Ca. 10 g der wärmesensibel eingestellten Mischung werden in ein Becherglas eingewogen und in ein Wasserbad mit einer konstanten Temperatur von 80°C gebracht. Unter gleichmässigen Rühren der Mischung mit einem Thermometer werden das Koagulierverhalten und der Temperaturanstieg verfolgt. Als Koagulationspunkt der Mischung wird die Temperatur angegeben, bei der eine vollständige und endgültige Trennung von Polymerisat und wässeriger Phase eintritt.

Es wird ein Koagulationspunkt von 43°C ermittelt.

Wird kein Nonylphenoläthoxylat zugesetzt, kommt es unmittelbar bei der Maleinsäurezugabe zur Koagulation der Mischung. Verzichtet man auf Äthylendiamin, so ist die Mischung nach dem Ansäuern nicht wärmesensibel.

*Beispiel 2*

Man verfährt analog Beispiel 1, verwendet jedoch nunmehr eine Lösung von 1,2 g Äthylendiamin und 6 g des Nonylphenoläthoxylats in 192,8 g Wasser. Man säuert mit Maleinsäure an. Hierbei ermittelt man in Abhängigkeit vom eingestellten pH-Wert die Koagulationspunkte.

| pH-Wert | 8 | 7 | 6 | 5 | 4 | 3 | 2 |
|---|---|---|---|---|---|---|---|
| Koagulationspunkt (°C) | * | 72 | 49 | 42 | 41 | 41 | 38 |

* keine Koagulation

*Beispiel 3*

Analog Beispiel 1 gibt man zu dem Latex eine Lösung von 2 g Äthylendiamin und 5 g eines Nonylphenoläthoxylats (20 mol Äthylenoxid/mol) in 193 g Wasser.

Koagulationspunkt bei pH 3: 49°C

*Beispiel 4*

Analog Beispiel 1 gibt man zu dem Latex eine Lösung von 1,9 g Cyclohexylamin und 6 g eines äthoxylierten Benzylhydroxydiphenyls (11 mol Äthylenoxid/mol) in 192,1 g Wasser.

Koagulationspunkt bei pH 3: 40°C

*Beispiel 5*

Analog Beispiel 1 gibt man zu dem Latex eine Lösung von 0,5 g Cyclohexylamin und 2 g eines äthoxylierten Nonylphenols (10 mol Äthylenoxid/mol) in 197,5 g Wasser.

Koagulationspunkt bei pH 5: 44°C
pH 3: 43°C

*Beispiel 6*

Analog Beispiel 1 gibt man zu dem Latex eine Lösung von 0,4 g Äthylendiamin und 5 g eines mit 6 mol Propylenoxid pro Mol alkoxylierten Isopropanolamins in 194,6 g Wasser.

Koagulationspunkt bei pH 3: 44°C

Verzichtet man bei einem Vergleichsversuch auf die Äthylendiaminzugabe, so ist die Mischung nach dem Ansäuern nicht wärmesensibel. Wird hingegen das propoxylierte Amin nicht zugesetzt, kommt es unmittelbar bei der Maleinsäurezugabe zur Koagulation der Mischung.

*Beispiel 7*

Analog Beispiel 1 gibt man zu dem Latex eine Lösung von 0,4 g Äthylendiamin und 6 g eines mit 20 mol Äthylenoxid pro Mol äthoxylierten Äthylendiamins in 193,6 g Wasser.

Koagulationspunkt bei pH 3: 48°C

Verzichtet man bei einem Vergleichsversuch auf die Äthylendiaminzugabe, so ist die Mischung nach dem Ansäuern nicht wärmesensibel.

*Beispiel 8*

Analog Beispiel 1 gibt man zu dem Latex eine Lösung von 0,6 g Äthylendiamin, 6 g eines mit 5 mol Äthylenoxid pro Mol äthoxylierten Äthanolamins und 2 g eines Nonylphenoläthoxylats (10 mol Äthylenoxid/mol) in 191,4 g Wasser.

Koagulationspunkt bei pH 3: 51°C

Verzichtet man bei einem Vergleichsversuch auf die Äthylendiaminzugabe, so ist die Mischung nach dem Ansäuern nicht wärmesensibel.

*Beispiel 9*

Analog Beispiel 1 gibt man zu dem Latex eine Mischung von 0,4 g Äthylendiamin, 4 g eines mit 25 mol Propylenoxid pro Mol alkoxylierten Isopropanolamins, 2 g eines mit 10 mol Äthylenoxids pro Mol äthoxylierten Nonylphenols und 10 g einer 10%igen wässerigen Natrium/Alkylarylsulfonat-Lösung in 183,6 g Wasser.

Koagulationspunkt bei pH 3: 44°C

Verzichtet man bei einem Vergleichsversuch auf die Äthylendiaminzugabe, so ist die Mischung nach dem Ansäuern nicht wärmesensibel.

### Beispiel 10

Analog Beispiel 1 gibt man zu dem Latex eine Mischung von 3 g einer 25 gew.%igen wässerigen Ammoniaklösung, 4 g eines mit 25 mol Propylenoxid pro Mol alkoxylierten Isopropanolamins, 2 g eines mit 10 mol Äthylenoxid äthoxylierten Nonylphenols und 10 g einer 10 gew.%igen wässerigen Natriuma/Alkylsulfonat-Lösung in 181 g Wasser. Man säuert mit 20 gew.%iger Maleinsäure an.

| pH-Wert | 9 | 8 | 7 | 6 | 5 | 4 | 3 | 2 |
|---|---|---|---|---|---|---|---|---|
| Koagulations-punkt (°C) | * | * | 61 | 43 | 41 | 40 | 40 | 38 |

* keine Koagulation

Ohne Ammoniakzugabe ist die Mischung nach dem Ansäuern nicht wärmesensibel.

### Beispiel 11

Analog Beispiel 1 gibt man zu dem Latex eine Mischung von 3,0 g 25 gew.%igem, wässerigen Ammoniak, 4 g eines mit 19 mol Propylenoxid pro Mol alkoxylierten Isopropanolamins und 10 g einer 10 gew.%igen wässerigen Natrium/Alkylarylsulfonat-Lösung in 183 g Wasser. Man säuert mit 20%iger wässeriger Maleinsäure an.

| pH-Wert | 8 | 7 | 6 | 5 | 4 | 3 | 2 |
|---|---|---|---|---|---|---|---|
| Koagulations-punkt (°C) | * | * | 44 | 43 | 42 | 42 | 40 |

* keine Koagulation

Ohne Ammoniakzugabe ist die Mischung nach dem Ansäuern nicht wärmesensibel.

### Beispiel 12

Analog Beispiel 1 gibt man zu dem Latex eine Mischung von 2,6 g 25 gew.%igem wässerigen Ammoniak und 3 g eines mit 19 mol Propylenoxid pro Mol alkoxylierten Isopropanolamins in 194,4 g Wasser. Man säuert mit 20 gew.%iger wässeriger Maleinsäure an.

| pH-Wert | 8 | 7 | 6 | 5 | 4 | 3 | 2 |
|---|---|---|---|---|---|---|---|
| Koagulations-punkt (°C) | * | 57 | 42 | 40 | 39 | 38 | 36 |

* keine Koagulation

Ohne Ammoniakzugabe ist die Mischung nach dem Ansäuern nicht wärmesensibel.

### Beispiel 13

Analog Beispiel 1 gibt man zu dem Latex eine Lösung von 2,4 g 25 gew.%igem, wässerigen Ammoniak und 4 g eines mit je 10 mol Äthylen- und Propylenoxid mischalkoxylierten Dodecylamins in 193,6 g Wasser.

Koagulationspunkt bei pH 3: 38°C

Verzichtet man bei einem Vergleichsversuch auf die Ammoniakzugabe, so ist die Mischung nach dem Ansäuern nicht wärmesensibel.

### Beispiel 14

Zu 250 Gew.-Teilen eines 40 gew.%igen Latex eines Copolymerisates von 64 Gew.% Butadien, 31 Gew.% Acrylnitril, 3,5 Gew.% N-Methylolacrylamid und 1,5 Gew.% Acrylamid gibt man eine Lösung von 0,8 g Cyclohexylamin und 5 g eines mit 20 mol Äthylenoxid pro Mol äthoxylierten Oleylamins in 64,2 g Wasser.

Man erheilt eine lagerstabile Mischung.

Hierauf wird mit 10 gew.%iger wässeriger Maleinsäure, Essigsäure oder Bernsteinsäure auf pH 3 gestellt und der Koagulationspunkt der Mischung bestimmt.

Koagulationspunkt: 44°C

Wird kein äthoxyliertes Oleylamin zugegeben, koaguliert die Mischung unmittelbar nach dem Ansäuern. Verzichtet man dagegen auf die Cyclohexylaminzugabe, so ist die Mischung nach dem Ansäuern nicht wärmesensibel.

### Beispiel 15

Analog Beispiel 14 gibt man zu dem Latex eine Mischung aus 4 g einer 25 gew.%igen wässerigen Ammoniaklösung, 3 g eines mit 25 mol Propylenoxid pro Mol propoxylierten Isopropanolamins und 61 g Wasser. Man säuert mit 20 gew.%iger Maleinsäure an.

Koagulationspunkt bei pH 3: 45°C

Ohne Ammoniakzugabe ist die Mischung nicht wärmesensibel.

## Patentansprüche

1. Verwendung von 0,01-4 Gew.%, bezogen auf den Polymergehalt, von Ammoniak und/oder Mono- und/oder Polyamin in Kombination mit 0,5-10 Gew.%, bezogen auf den Polymergehalt, eines Aminopolyäthers und/oder nichtionischer Tenside auf Polyätherbasis zur Wärmesensibilisierung eines natürlichen und/oder synthetischen Latex, bei dem das Latexgemisch auf einen pH-Wert von kleiner als 7 eingestellt wird.

2. Verwendung gemäss Anspruch 1 von 0,05-2,5 Gew.%, bezogen auf den Polymergehalt, Ammoniak und/oder Mono- und/oder Polyamin in Kombination mit 1-5 Gew.%, bezogen auf den Polymergehalt, Aminopolyäther und/oder nichtionischem Tensid auf Polyätherbasis.

## Claims

1. Use of 0.01-4% by weight, based on the polymer content, of ammonia and/or monoamine and/or polyamine in combination with 0.5-10% by weight, based on the polymer content, of an aminopolyether and/or polyether-based non-ionic surfactant for the heat sensitisation of a natural and/or synthetic latex, in which the latex mixture is adjusted to a pH value below 7.

2. Use according to claim 1 of 0.05-2.5% by weight, based on the polymer content, of ammonia and/or monoamine and/or polyamine in combination with 1-5% by weight, based on the polymer content, of aminopolyether and/or polyether-based non-ionic surfactant.

## Revendications

1. Utilisation de 0,01-4% en poids, par rapport à la teneur en polymère, d'ammoniac et/ou d'une mono- et/ou polyamine en combinaison avec 0,5-10% en poids, par rapport à la teneur en polymère, d'un aminopolyéther et/ou de tensio-actifs non ioniques à base de polyéther pour la sensibilisation à la chaleur d'un latex naturel et/ou synthétique, où le mélange de latex est réglé à une valeur de pH inférieure à 7.

2. Utilisation selon la revendication 1 de 0,05-2,5% en poids, par rapport à la teneur en polymère, d'ammoniac et/ou d'une mono- et/ou polyamine en combinaison avec 1-5% en poids, par rapport à la teneur en polymère, d'un aminopolyéther et/ou d'un tensio-actif non ionique à base de polyéther.